(19) Europäisches Patentamt
European Patent Office
Office européen des brevets

(11) **EP 4 647 963 A1**

(12) **EUROPÄISCHE PATENTANMELDUNG**

(43) Veröffentlichungstag:
**12.11.2025 Patentblatt 2025/46**

(21) Anmeldenummer: **24174534.8**

(22) Anmeldetag: **07.05.2024**

(51) Internationale Patentklassifikation (IPC):
***G06K 19/077*** *(2006.01)*

(52) Gemeinsame Patentklassifikation (CPC):
**G06K 19/07773**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **INO Holding GmbH**
**24539 Neumünster (DE)**

(72) Erfinder: **Clauß, Conrad**
**80939 München (DE)**

(74) Vertreter: **Stork Bamberger Patentanwälte PartmbB**
**Meiendorfer Strasse 89**
**22145 Hamburg (DE)**

(54) **VORRICHTUNG, ANORDNUNG UND VERFAHREN ZUR DRAHTLOSEN IDENTIFIKATION VON IN EINER VORZUGSRICHTUNG STAPELFÄHIGEN ARTIKELN**

(57)     Die Erfindung betrifft eine Vorrichtung zur drahtlosen Identifikation von in einer Vorzugsrichtung stapelfähigen Artikeln (31), umfassend ein Trägerelement mit einem RFID-Schaltkreis und einem sich zumindest im Wesentlichen in einer Trägerelementebene des Trägerelements planar erstreckend ausgebildeten Antennenelement (13), wobei das Antennenelement (13) eine elektrisch leitfähige Leiterstruktur (10) aufweist und sich dadurch auszeichnet, dass die Leiterstruktur (10) ein unter Bildung eines Isolationsspaltes (14) umlaufendes Leiterschleifenelement (15) umfasst und das Leiterschleifenelement (15) mindestens einen Isolationsschlitz (16) aufweist, derart, dass das Leiterschleifenelement (15) eine innere Leiterschleife (17) und eine äußere Leiterschleife (18) bildet, und wobei die innere Leiterschleife (17) oder die äußere Leiterschleife (18) eine elektrische Unterbrechungsstelle (19) umfasst und der RFID-Schaltkreis im Bereich der Unterbrechungsstelle (19) unter elektrischer Kontaktierung der der Unterbrechungsstelle (19) zugewandten freien Enden (20, 21) der inneren Leiterschleife (17) oder der äußeren Leiterschleife (18) angeordnet ist, so dass die freien Enden (20, 21) jeweils an Antennenanschlüssen des RFID-Schaltkreises elektrisch angeschlossen sind. Weiter betrifft die Erfindung eine Anordnung umfassend einen in einer Vorzugsrichtung stapelfähigen Artikel (31) sowie ein Verfahren zum drahtlosen Identifizieren solcher Artikel (31) eines Stapels (33).

Fig. 3

EP 4 647 963 A1

**Beschreibung**

Die vorliegende Erfindung betrifft eine Vorrichtung zur drahtlosen Identifikation von in einer Vorzugsrichtung stapelfähigen Artikeln, umfassend ein Trägerelement mit einem RFID-Schaltkreis und einem sich zumindest im Wesentlichen in einer Trägerelementebene des Trägerelements planar erstreckend ausgebildeten Antennenelement, wobei das Antennenelement eine elektrisch leitfähige Leiterstruktur aufweist.

Weiter betrifft die Erfindung eine Anordnung umfassend einen in einer Vorzugsrichtung stapelfähigen Artikel mit einer solchen Vorrichtung.

Des Weiteren betrifft die Erfindung ein Verfahren zum drahtlosen Identifizieren von in einer Vorzugsrichtung gestapelten Artikeln eines Stapels.

Derartige Vorrichtungen kommen beispielsweise als Transponder, insbesondere in Etikettenform, zum Einsatz. Mittels solcher Vorrichtung ist es grundsätzlich möglich, beliebige Artikel eindeutig zu kennzeichnen und auf diese Weise auf drahtlosem Wege zu identifizieren.

Die Einsatzzwecke sind daher vielfältig. Beispielsweise dienen derartige Vorrichtungen zum Kennzeichnen und zur Identifikation von Kleidungsstücken, Behältern, pharmazeutischen Umverpackungen, Bauteilen in Produktionsprozessen, zur Kennzeichnung im Bereich der Logistik, zur Sicherung von Produkten gegen Diebstahl und dergleichen. Vor allem in der Lebensmittelindustrie sowie der Gastronomie halten Artikel wie Mehrwegbehältnisse, z. B. Becher, Bowls und Geschirr immer mehr Einzug. Diese Behältnisse müssen innerhalb ihres Lebenszyklus immer wieder eineindeutig identifiziert werden, beispielsweise zu Reinigungszwecken, bei Zu- und Abbuchungen oder (Neu-)Befüllung mit Speisen und/oder Getränken.

Bisher erfolgt die Identifikation solcher Behälter mittels aufgebrachter ein- oder zweidimensionaler optischer Codes wie beispielsweise Bar- oder QR-Codes. Um diese erfassen zu können, müssen die Behälter zunächst aufwendig vereinzelt und anschließend die genannten Codes optisch ausgelesen werden. Im Falle verschmutzter Behälter, müssen diese - zumindest im Bereich des aufgebrachten Codes - zunächst noch gesäubert werden, bevor eine Erfassung überhaupt möglich ist. Diese Vorgänge lassen sich nur mit entsprechend hohem apparativen Aufwand automatisieren, bedeuten zudem einen hohen zeitlichen Aufwand und sind daher insgesamt sehr kostenintensiv.

Beispielsweise geht aus dem Dokument DE 10 2022 126 577 A1 ein Transponderetikett für ein Gefäß hervor. Diese umfasst eine Trägerschicht sowie eine RFID-Funktionseinheit. Diese weist einen RFID-Chip auf, der mit einer Antennenstruktur gekoppelt ist. Die Antennenstruktur weist wiederum zwei Antennenabschnitte auf, zwischen denen eine Antennenschleife angeordnet ist, die mit dem jeweiligen Antennenabschnitt gekoppelt ist. Die Antennenabschnitte umfassen mäanderförmige Antennenarme.

Nachteilig bei derartigen Antennenanordnungen ist, dass diese eine elektromagnetische Abstrahl-/Empfangscharakteristik bzw. eine Richtcharakteristik aufweisen, die bevorzugt senkrecht zur Antennenebene und damit zur Trägerelementebene ausgerichtet ist. Mit anderen Worten sendet und empfängt eine solche Antenne bevorzugt in einer Richtung senkrecht zur Trägerelementebene.

Werden mehrere solcher Transponderetiketten in räumlicher Nähe zueinander angeordnet, so treten mehrere Wechselwirkungseffekte auf, die die drahtlose Kommunikation mit diesen deutlich erschweren oder sogar unmöglich machen. So treten einerseits Abschirm-Effekte zwischen den Antennenstrukturen auf, die sowohl das Aussenden elektromagnetischer Wellen erschweren als auch den Empfang elektromagnetischer Wellen stark dämpfen, als auch Störeinkopplungen durch Empfang von benachbart ausgesendeten Signalen.

Besonders stark treten diese unerwünschten Dämpfungseffekte auf, wenn eine Mehrzahl solcher Transponderetiketten senkrecht zur Trägerelementebene regelmäßig in einer Vorzugsrichtung angeordnet sind. Ein typisches Beispiel für solche regelmäßigen Anordnungen sind Mehrwegartikel, wie gestapelte Trinkbecher, Schalen oder Teller für Lebensmittel, die vor oder nach dem Gebrauch ineinander bzw. übereinander gestapelt werden. Sind an diesen Behältnissen die vorgenannten Transponderetiketten jeweils stets an derselben Stelle angeordnet, so summieren sich die zuvor genannten Abschirmungs-, Dämpfungs- und Superpositionseffekte, sodass eine drahtlose störungsfreie Kommunikation mit den einzelnen Transponderetiketten nicht mehr zuverlässig sichergestellt ist.

Es ist daher Aufgabe der vorliegenden Erfindung, eine Vorrichtung vorzuschlagen, die es ermöglicht, räumlich nahe beieinander angeordnete Artikel zuverlässig zu identifizieren. Eine solche Identifikation soll dabei möglichst effizient und automatisiert möglich sein. Insbesondere ist es Aufgabe der vorliegenden Erfindung eine Vorrichtung vorzuschlagen, die die zuverlässige Identifikation von regelmäßig angeordneten Artikeln ermöglicht, insbesondere solchen, die in einer Vorzugsrichtung gestapelt angeordnet sind.

Ferner ist es Aufgabe der Erfindung eine solche Vorrichtung bereitzustellen, die konstruktiv möglichst einfach gehalten und damit, insbesondere als Massenware, kostengünstig herzustellen ist. Auch ist es Aufgabe der vorliegenden Erfindung, eine Vorrichtung bereitzustellen, die gewünschten Eigenschaften bei einer nur geringen Bauhöhe der Vorrichtung selbst aufweist. Des Weiteren besteht die Aufgabe darin, eine entsprechende Anordnung vorzuschlagen.

Auch ist es Aufgabe der vorliegenden Erfindung ein Verfahren anzugeben, dass eine zuverlässige, möglichst komfortable und zeitsparende drahtlose Identifikation von Artikeln erlaubt, die sich in einem Artikelstapel befinden.

Die Aufgabe wird durch die Vorrichtung mit den eingangs genannten Merkmalen dadurch gelöst, dass die Leiterstruktur ein unter Bildung eines Isolationsspaltes umlaufendes Leiterschleifenelement umfasst und das Leiterschleifenelement mindestens einen Isolationsschlitz aufweist, derart, dass das Leiterschleifenelement eine innere Leiterschleife und eine äußere Leiterschleife bildet, und wobei die innere Leiterschleife oder die äußere Leiterschleife eine elektrische Unterbrechungsstelle umfasst und der RFID-Schaltkreis im Bereich der Unterbrechungsstelle unter elektrischer Kontaktierung der der Unterbrechungsstelle zugewandten freien Enden der inneren Leiterschleife oder der äußeren Leiterschleife angeordnet ist, so dass die freien Enden jeweils an Antennenanschlüssen des RFID-Schalkreises elektrisch angeschlossen sind. Vorteilhafterweise wird so trotz der durch das planare Trägerelement bedingten flachen Antennenstruktur eine Strahlungscharakteristik der Antenne erzielt, die einerseits senkrecht zur Trägerelementebene stark gedämpft ist und andererseits die Abstrahlung bzw. den Empfang elektromagnetischer Wellen in der Trägerelementebene begünstigt.

Die Hauptstrahlungscharakteristik der erfindungsgemäßen Vorrichtung liegt daher vorteilhafterweise in der Ebene des Trägerelements bzw. ist Ausgangspunkt für eine von dieser Ebene ausgehenden seitlichen Abstrahlung elektromagnetischer Wellen. Aufgrund der Reziprozität solcher Antennenanordnung gelten die genannten Vorteile in analoger Weise auch für deren Empfangseigenschaften.

Anders ausgedrückt wird mit der erfindungsgemäßen Vorrichtung eine Richtcharakteristik erreicht, die sich im Wesentlichen ausgehend von der Ebene des Trägerelements radial nach außen erstreckt. Senkrecht zur Trägerelementebene ist die Richtcharakteristik wenig bis gar nicht ausgeprägt. Vorteilhafterweise werden so gegenseitige Störungen einer Mehrzahl der erfindungsgemäßen Vorrichtung, die sich beispielsweise durch die regelmäßige Anordnung derselben in einer Vorzugsrichtung ergeben können, auf ein Minimum reduziert. Aufgrund der genannten Strahlungscharakteristik ist gleichwohl eine Kommunikation mit der jeweiligen Vorrichtung, beispielsweise durch seitliches Heranführen eines Lese-Empfangsgerätes störungsfrei möglich. Zur Vereinfachung der Darstellung soll die Trägerelementebene als XY-Ebene bezeichnet werden, zu der eine Z-Achse senkrecht gedacht angeordnet ist.

Wie bereits erwähnt gilt aufgrund der Reziprozität das zuvor Gesagte hinsichtlich des Abstrahlverhaltens in analoger Weise auch für das Empfangs- bzw. Anregungsverhalten der erfindungsgemäßen Antennenstruktur durch elektromagnetische Felder von außen. Die erfindungsgemäße Antennenstruktur ist in ihrer Antennenebene, also jener Ebene in der Trägerelementebene, aus jeder beliebigen Richtung anregbar eingerichtet. Dies begünstigt eine stets zuverlässige drahtlose Identifikation der erfindungsgemäßen Vorrichtung, insbesondere auch bei willkürlichen Anordnungen oder Verdrehungen der zu identifizierenden Artikel.

Über die Unterbrechungsstelle findet mittels des RFID-Chips die elektrische Anregung statt. Die innere Leiterschleife sowie die äußere Leiterschleife bilden zu dieser Anregungsstelle einen geschlossenen Umlauf, sodass die Richtungen der jeweiligen Ströme in der inneren Leiterschleife und der äußeren Leiterschleife jeweils gegensätzlich zueinander gerichtet sind. Anders ausgedrückt bilden die innere und äußere Leiterschleife gegenläufige Strompfade. Dies bietet den Vorteil, dass die in gegensätzliche Richtungen durch die in innere und äußere Leiterschleife fließenden Ströme ein sich - zumindest weitestgehend - gegenseitig kompensierendes Magnetfeld induzieren.

Hierdurch wird eine starke Dämpfung der Strahlungscharakteristik in Z-Richtung erreicht. Auf diese Weise ist es erstmals möglich, einzelne Artikel in einer Vielzahl solch regelmäßig angeordneter Artikel zuverlässig auf drahtlosem Wege zu identifizieren. Insbesondere ist es so möglich, in der genannten Vorzugsrichtung angeordnete Artikel drahtlos zu identifizieren. Vorteilhafterweise sind die innere Leiterschleife und die äußere Leiterschleife stets galvanisch miteinander gekoppelt ausgebildet. Die Unterbrechungsstelle ist wahlweise in der inneren Leiterschleife oder in der äußeren Leiterschleife angeordnet.

Der Isolationsspalt bildet vorzugsweise freie Antennenenden, an denen sich bevorzugt das hochfrequente elektrische Feld ausbildet. Die Kombination der Geometrien von Isolationsspalt und Isolationsschlitz zwischen der inneren Leiterschleife und der äußeren Leiterschleife bewirken vorteilhafterweise, dass die Strahlungscharakteristik des Antennenelements in der Trägerelementebene bevorzugt wird, während diese in einer senkrecht zu der Trägerelementebene liegenden Richtung deutlich reduziert ist.

Das Antennenelement erstreckt sich zumindest im Wesentlichen in dieser Trägerelementebene, d. h. die Ebene des Antennenelements liegt in der Trägerelementebene oder zu dieser parallel. Im Wesentlichen parallel bedeutet, dass die Ebene des Antennenelements allenfalls um einen kleinen Winkelbereich, beispielsweise kleiner 20°, gegenüber der Trägerelementebene geneigt angeordnet ist.

Die erfindungsgemäße Vorrichtung ist bevorzugt als Klebe- oder Inmouldlabel ausgebildet, das eingerichtet ist, mit einem zu identifizierenden Artikel dauerhaft verbunden zu werden.

Eine zweckmäßige Ausgestaltung der Erfindung ist dadurch gekennzeichnet, dass der Isolationsschlitz von dem Leiterschleifenelement, mit Ausnahme der Unterbrechungsstelle, allseitig umschlossen ist. Vorteilhafterweise bilden die innere Leiterschleife und die äußere Leiterschleife so zusammen mit der elektrische Unterbrechungsstelle eine geschlossene elektrische Masche. Hierdurch wird die bereits zuvor angesprochene Stromgegenkopplung erreicht, mit ihrer vorteilhaften Wirkung für die Unterdrückung der Abstrahlung elektromagnetischer Wellen senkrecht zu der Trägerelementebene.

Eine bevorzugte Weiterbildung der Erfindung zeichnet sich dadurch aus, dass der Isolationsschlitz eine konstante Breite aufweist. Dies bietet den Vorteil, dass sich in der inneren Leiterschleife und der äußeren Leiterschleife über die Länge des Isolationsschlitzes weitestgehend konstante Stromdichten einstellen, die aufgrund der entgegengesetzten Stromrichtungen die Strahlungscharakteristik senkrecht zu der Trägerebene stark reduzieren.

Eine weitere zweckmäßige Ausbildung der Erfindung ist dadurch gekennzeichnet, dass der Isolationsschlitz sich über einen Winkelbereich von mindestens 120° erstreckt. Weiter bevorzugt erstreckt sich der Isolationsschlitz über einen Winkelbereich von mindestens 180°, höchst bevorzugt über einen Winkelbereich größer 210°. Vorteilhafterweise kann durch Wahl des Winkelbereiches, über den sich der Isolationsschlitz erstreckt, die Strahlungscharakteristik angepasst und vorgegeben werden. Ein weiterer Vorteil besteht darin, dass durch die Wahl des Winkelbereichs eine optimale Anpassung an die Eingangsimpedanz des RFID-Chips erfolgt.

Eine bevorzugte Weiterbildung der Erfindung zeichnet sich dadurch aus, dass sich der Isolationsspalt über einen Winkelbereich von maximal 150° erstreckt. Besonders bevorzugt ist der Winkelbereich geringer als 30°, höchst bevorzugt geringer als 20° gewählt. Je geringer der Winkelbereich ist, desto größere elektrische Feldstärken treten im Bereich des Isolationsspaltes auf.

Gemäß einer weiteren bevorzugten Ausbildung der Erfindung ist die Leiterstruktur kreis- oder ellipsenartig ausgebildet. Anders ausgedrückt ist die Leiterstruktur einer Kreis- oder Ellipsenform angenähert oder entspricht dieser in weiten Bereichen. Vorteilhafterweise ist die Leiterstruktur also stets konvex gekrümmt ausgebildet. Eine kreisartige Leiterstruktur weist vorzugsweise in der Trägerelementebene eine im Wesentlichen rotationssymmetrische Strahlungscharakteristik auf, sodass die Sende- und Empfangseigenschaften in der Trägerelementebene richtungsunabhängig überall im Wesentlichen gleich sind.

Eine weitere zweckmäßige Ausbildung der Erfindung ist dadurch gekennzeichnet, dass die Leiterstruktur rechteckartig ausgebildet ist. Eine solche rechteckartige Leiterstruktur stellt eine weitere vorteilhafte Ausgestaltung der erfindungsgemäßen Vorrichtung dar. Die Leiterstruktur ist damit der Form eines Rechteckes bzw. einer rechteckförmigen Fläche angenähert. Insbesondere kann die Leiterstruktur auch der Form eines Quadrates angenähert ausgebildet sein.

Eine weitere zweckmäßige Ausgestaltung der Erfindung ist dadurch gekennzeichnet, dass die äußere Leiterschleife eine größere Leiterbreite als die innere Leiterschleife aufweist.

Eine zweckmäßige Ausgestaltung der Erfindung ist dadurch gekennzeichnet, dass die Gesamtlänge einer Außenkontur der Leiterstruktur zumindest im Wesentlichen der halben Wellenlänge entspricht, die sich in der Leiterstruktur bei Betrieb des RFID-Schaltkreises mit seiner Nenn-Sende/Empfangsfrequenz ergibt. Auf diese Weise ist die Antennenstruktur optimal an die Betriebsfrequenz des RFID-Chips angepasst und erzielt so den größtmöglichen Antennengewinn. Die Gesamtlänge der Außenkontur entspricht vorzugsweise exakt der genannten halben Wellenlänge, kann jedoch alternativ auch um einen vorgegebenen Faktor von dieser abweichen.

Eine bevorzugte Weiterbildung der Erfindung zeichnet sich dadurch aus, dass die Leiterstruktur auf das Trägerelement aufgedruckt ist. Die Leiterstruktur ist auf diese in der Massenproduktion kostengünstig herstellbar.

Des Weiteren wird die Aufgabe durch die eingangs genannte Anordnung gelöst, die die zuvor beschriebene erfindungsgemäße Vorrichtung umfasst, wobei die Vorrichtung derart an dem Artikel angeordnet ist, dass die Trägerelementebene des Trägerelements zumindest im Wesentlichen senkrecht zu der Vorzugsrichtung ausgerichtet sind. Auf diese Weise ist die erfindungsgemäße Vorrichtung jeweils immer derart an einem der Artikel angeordnet, dass die Trägerelementebene senkrecht oder im Wesentlichen senkrecht zu der Vorzugsrichtung ausgerichtet ist. Dies bietet den Vorteil, dass beim Stapeln mehrere der Artikel der erfindungsgemäßen Vorrichtung jeweils mit ihrer Trägerelementebene senkrecht zu der Vorzugsrichtung ausgerichtet sind, in welcher die Strahlungscharakteristik des Antennenelements deutlich reduziert ausgebildet ist. Hingegen wird so ermöglicht, dass die erfindungsgemäße Vorrichtung in der Trägerelementebene eine erhöhte Strahlungscharakteristik aufweist.

Die Hauptabstrahlung erfolgt damit senkrecht bzw. im Wesentlichen senkrecht zu der Vorzugsrichtung, sodass eine gegenseitige Beeinflussung, Abschirmung und/oder gegenseitige Störung aufgrund der Stapelung der Artikel vermieden wird. Erfindungsgemäß ist es so erstmals möglich, derartige in der Vorzugsrichtung gestapelte Artikel mittels der, wie zuvor beschriebenen angeordneten, erfindungsgemäßen Vorrichtung störungsfrei drahtlos zu identifizieren, ohne, dass die Artikel vorher vereinzelt werden müssen.

Eine weitere zweckmäßige Ausbildung der Erfindung ist dadurch gekennzeichnet, dass der Artikel ein Behälter für Lebensmittel ist. Vorzugsweise sind die Behälter als Einweg- oder Mehrwegbehälter ausgebildet. Beispielsweise als Becher, Schalen, Teller, Besteck, Bowl-Gefäße oder dergleichen.

Eine bevorzugte Weiterbildung der Erfindung zeichnet sich dadurch aus, dass der Behälter ein Bodenelement umfasst und die Vorrichtung an oder in dem Bodenelement angeordnet ist. Dies bietet den Vorteil, dass die erfindungsgemäße Vorrichtung mit ihrer Trägerelementebene bereits senkrecht oder im Wesentlichen senkrecht zu der Vorzugsrichtung ausgerichtet ist.

Werden beispielsweise Becher ineinandergesteckt aufgestapelt, so sind diese zwangsläufig derart ausgerichtet, dass ihre Bodenelemente parallel zueinander ausgerichtet sind. Die erfindungsgemäße Vorrichtung ist daher bevorzugt jeweils an einem solchen Bodenelement, beispielsweise stoffschlüssig, angeordnet. Auch ist es möglich, dass diese in dem Bodenelement, beispielsweise durch Einbringen während der Herstellung derselben, eingebracht werden. Letzteres bietet zudem den Vorteil, dass die erfindungsgemäße Vorrichtung nicht zerstörungsfrei von dem Artikel entfernt werden kann. Hierdurch ist ein Manipulationsschutz gegeben.

Ferner wird die Aufgabe durch das eingangs genannte Verfahren gelöst, wobei an jedem der Artikel jeweils eine der zuvor beschriebenen erfindungsgemäßen Vorrichtungen derart angeordnet ist, dass jeweils die Trägerelementebenen der Trägerelemente zumindest im Wesentlichen senkrecht zu der Vorzugsrichtung ausgerichtet sind, umfassend die Schritte: Verbringen des Stapels in den Wirkbereich einer zur drahtlosen Kommunikation mit den RFID-Schaltkreisen eingerichteten RFID-Leseeinrichtung oder umgekehrt, derart, dass die RFID-Leseeinrichtung relativ zu dem Stapel seitlich zu diesem zumindest im Wesentlichen parallel zu der Vorzugsrichtung positioniert ist und Auslesen von Identifikationsmerkmalen eines jeden der Artikel des Stapels mittels der RFID-Leseeinrichtung. Dies bietet den Vorteil, dass die einzelnen Artikel - trotz ihres Vorhandenseins in einem Stapel jeweils drahtlos eindeutig und störungsfrei identifiziert werden können. Besonders komfortabel und zeitsparend ist das erfindungsgemäße Verfahren, weil auf eine bisher erforderliche Vereinzelung der Artikel zur drahtlosen Identifikation derselben verzichtet werden kann. Mittels des erfindungsgemäßen Verfahrens ist eine drahtlose Einzelidentifikation der Artikel möglich, auch wenn sich diese nahe beieinander, beispielsweise in der genannten Vorzugsrichtung gestapelt in einem aus einer Mehrzahl solcher Artikel bestehendem Stapel befinden.

Die erfindungsgemäße Vorrichtung, Anordnung sowie das erfindungsgemäße Verfahren eignet sich daher insbesondere für die drahtlose Identifikation von Artikel, die bei Mehrwegrückgabesystemen Verwendung finden.

Eine bevorzugte Weiterbildung der Erfindung zeichnet sich durch Bewegen der RFID-Leseeinrichtung relativ zu dem Stapel oder umgekehrt parallel zu der Vorzugsrichtung und sequenzielles Auslesen der Identifikationsmerkale Artikel für Artikel des Stapels mittels der RFID-Leseeinrichtung aus. Das Auslesen eines jeden Identifikationsmerkmals der Artikel erfolgt also bevorzugt dadurch, dass die RFID-Leseeinrichtung relativ zu dem Stapel bewegt wird. Alternativ ist es auch möglich, den Stapel gegenüber einer ortsfest angeordneten RFID-Leseeinrichtung zu bewegen. Vorzugsweise findet die vorgenannte Bewegung automatisiert statt, sodass die Identifikationsmerkmale sämtlicher der Artikel eines Stapels drahtlos ausgelesen werden.

Die mit der vorliegenden Erfindung erzielbaren Vorteile wurden bereits im Zusammenhang mit der erfindungsgemäßen Vorrichtung sowie der erfindungsgemäßen Anordnung zuvor im Detail beschrieben. Zur Vermeidung von Wiederholungen verweisen wir auch im Zusammenhang mit dem erfindungsgemäßen Verfahren auf die dort genannten Vorteile, die hier in gleicher Weise gelten.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:

Fig. 1   eine Darstellung der Leiterstruktur der erfindungsgemäßen Vorrichtung mit einer beispielhaften schematischen Strahlungscharakteristik in der Trägerelementebene,

Fig. 2   eine in Fig. 1 gezeigte Darstellung in Seitenansicht,

Fig. 3   die in Fig. 1 dargestellte Leiterstruktur in vergrößerter Ansicht,

Fig. 4   eine Ausführungsform der Leiterstruktur mit Unterbrechungsstelle in der inneren Leiterschleife,

Fig. 5   eine weitere Ausführungsform der Leiterstruktur mit Unterbrechungsstelle in der äußeren Leiterschleife,

Fig. 6   eine weitere Ausführungsform der Leiterstruktur mit asymmetrisch ausgeführtem Isolationsschlitz,

Fig. 7   eine weitere Ausführungsform der Leiterstruktur mit vergrößertem Isolationsspalt,

Fig. 8   eine weitere Ausführungsform mit ellipsenartiger Leiterstruktur,

Fig. 9   eine weitere Ausführungsform mit rechteckartiger Leiterstruktur,

Fig. 10   eine weitere Ausführungsform der Leiterstruktur mit nicht-konstanter Isolationsschlitzbreite,

Fig. 11   eine schematische Darstellung der erfindungsgemäßen Anordnung und

Fig. 12   eine schematische Darstellung einer Mehrzahl voneinander in einer Vorzugsrichtung gestapelter Artikel.

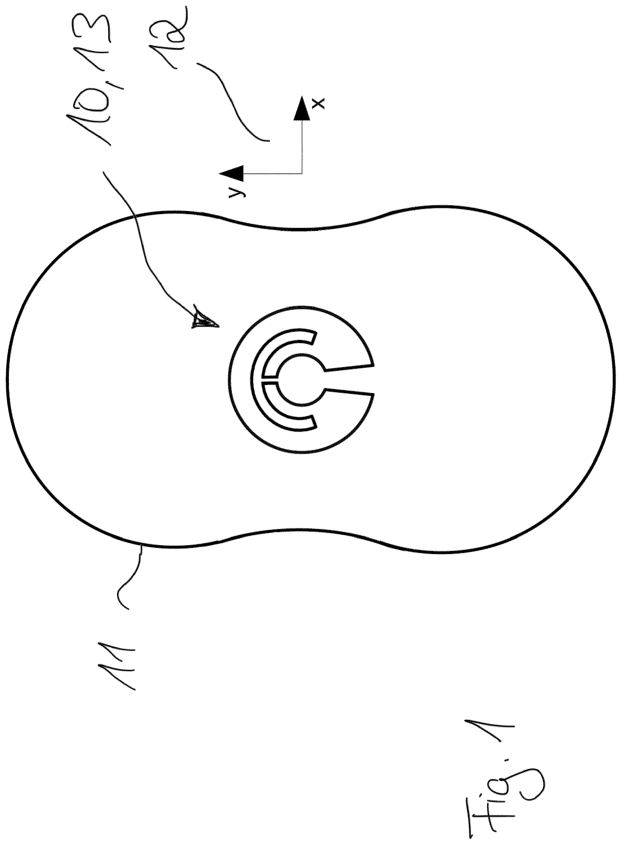

Figur 1 zeigt beispielhaft eine Darstellung einer Leiterstruktur 10 der erfindungsgemäßen Vorrichtung. Zudem ist beispielhaft eine Strahlungscharakteristik 11 schematisch gezeigt. Die Figur 1 ist in Blickrichtung auf eine Trägerelementebene 12 dargestellt. Die Trägerelementebene 12 wird durch die beiden in Fig. 1 gezeigten Richtungsvektoren aufgespannt.

Die erfindungsgemäße Vorrichtung umfasst neben einem - in der Zeichnung nicht dargestellten - Trägerelement mit einem RFID-Schaltkreis ein Antennenelement 13. Das Antennenelement 13 erstreckt sich zumindest im Wesentlichen in einer Trägerelementebene 12 des Trägerelements planar. Vorzugsweise weist das Antennenelement 13 die Leiterstruktur 10 auf, die elektrisch leitfähig ausgebildet ist.

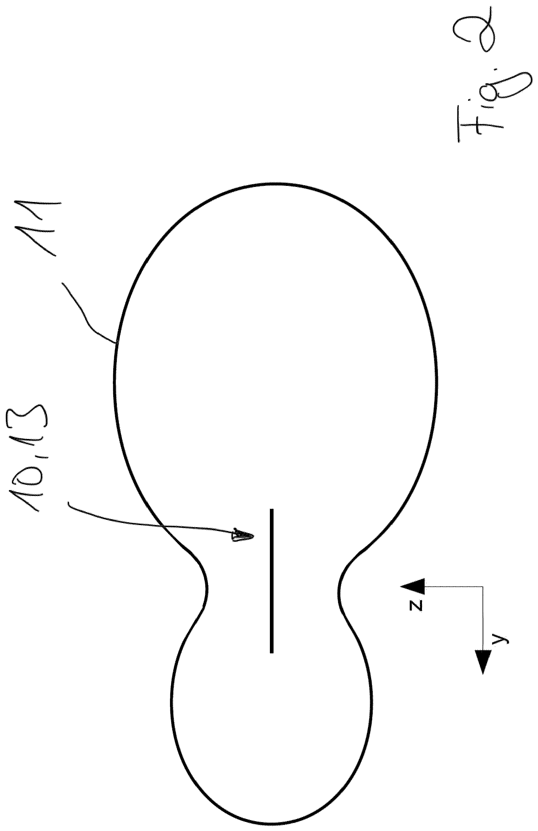

Fig. 2 zeigt die in Fig. 1 gezeigte Darstellung in Seitenansicht. Die Vorzugsrichtung erstreckt sich hier in der gezeigten z-Richtung. Anhand der Strahlungscharakteristik 11 der Fig. 2 ist das in der Trägerebene bevorzugte Abstrahlungsverhalten gut zu erkennen, während die Abstrahlung in der Vorzugsrichtung demgegenüber erfindungsgemäß deutlich reduziert ist.

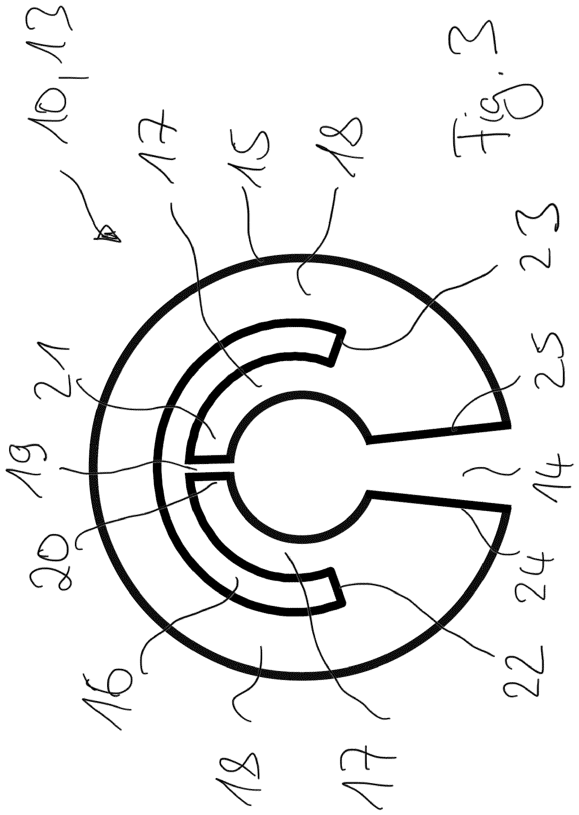

Fig. 3 zeigt die in Fig. 1 dargestellte Leiterstruktur 10 bzw. das Antennenelement 13 in vergrößerter Ansicht. Aus Gründen der besseren Übersichtlichkeit sind die weiteren Merkmale der erfindungsgemäßen Vorrichtung nur in dieser vergrößerten Ansicht dargestellt. Die Leiterstruktur 10 umfasst ein unter Bildung eines Isolationsspaltes 14 umlaufendes Leiterschleifenelement 15. Das Leiterschleifenelement 15 weist einen Isolationsschlitz 16 auf. Dieser ist derart angeordnet, dass das Leiterschleifenelement 15 eine innere Leiterschleife 17 und eine äußere Leiterschleife 18 bildet.

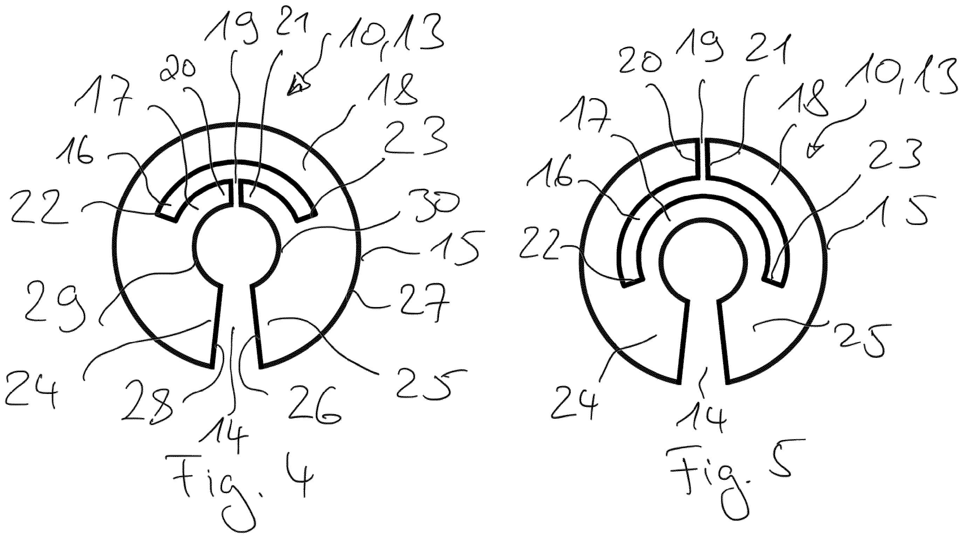

Weiter umfasst die innere Leiterschleife 17 eine elektrische Unterbrechungsstelle 19. Alternativ umfasst die äußere Leiterschleife 18, wie in Fig. 5 dargestellt, die elektrische Unterbrechungsstelle 19.

Der RFID-Schaltkreis ist im Bereich der Unterbrechungsstelle 19 unter elektrischer Kontaktierung der Unterbrechungsstelle 19 angeordnet, nämlich so, dass an freien Enden 20, 21 der inneren Leiterschleife 17 oder der äußeren Leiterschleife 18 jeweils Antennenanschlüsse des RFID-Schalkreises elektrisch angeschlossen sind.

Wie in der Zeichnung gezeigt, ist der Isolationsschlitz 16 von dem Leiterschleifenelement 15, mit Ausnahme der Unterbrechungsstelle 19, vorzugsweise allseitig umschlossen.

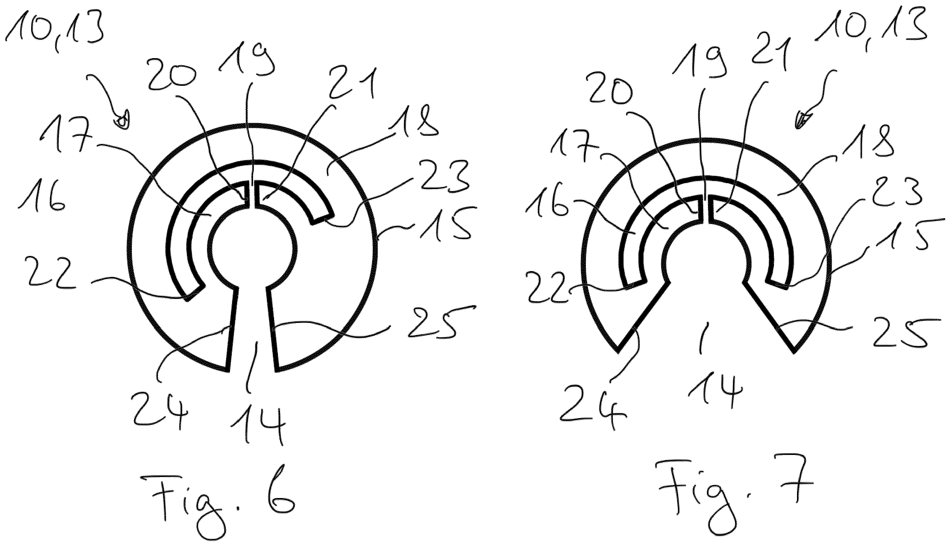

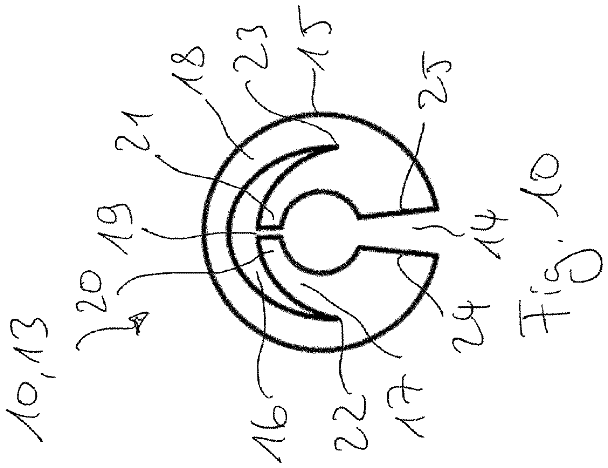

Vorzugsweise ist die Breite des Isolationsschlitzes 16 über seine Länge variabel ausgebildet, um elektrische Eigenschaften, wie Wellenwiderstand, Stromdichteverteilung in dem Leiterschleifenelement 15 und/oder das Abstrahlungsverhalten anzupassen. Eine mögliche vorteilhafte Ausgestaltung einer solchen nicht-konstanten Breite des Isolationsschlitzes 16 ist in Fig. 10 exemplarisch gezeigt. Weiter bevorzugt weist der Isolationsschlitz 16 - wie in den Figuren 1 und 2 bis 9 gezeigt - eine konstante Breite auf.

Vorzugsweise erstreckt sich der Isolationsschlitz 16 über einen Winkelbereich von mindestens 120°, wie dies beispielhaft in den Figuren 1, 3, 5, 6, 7, 8, 9 und 10 gezeigt ist. Der Winkelbereich bezeichnet dabei den überstrichenen Winkel von einem Schlitzende 22 zum jeweils anderen Schlitzende 23.

Gemäß einer vorteilhaften Weiterbildung der Erfindung erstreckt sich der Isolationsspalt 14 über eine Winkelbereich von maximal 150°. Der Winkelbereich bezeichnet dabei den überstrichenen Winkeln von einem Isolationsspaltende 24 zum jeweils anderen Isolationsspaltende 25.

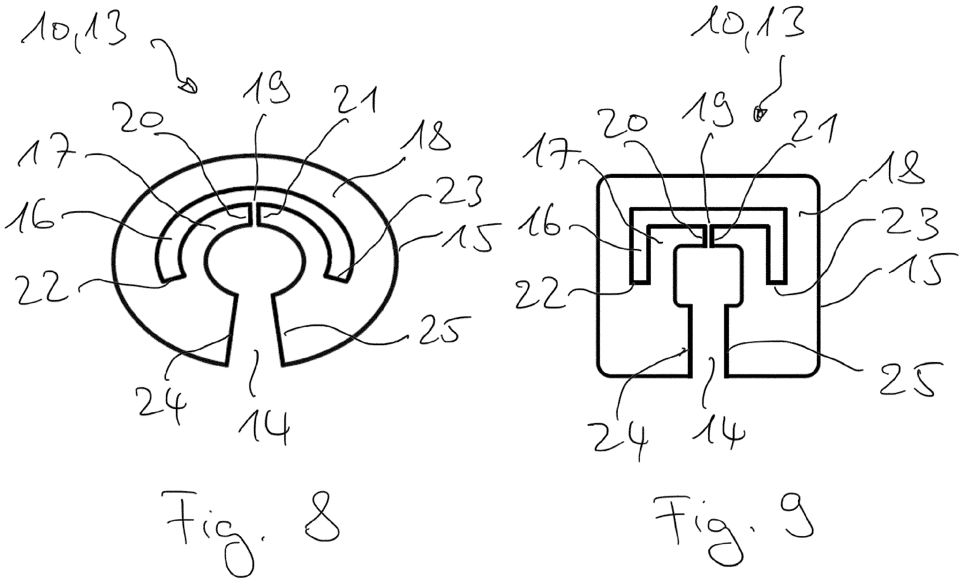

Bevorzugt ist die Leiterstruktur 10, wie eingangs bereits beschrieben und in den Figuren 1, 3, 4 bis 7 sowie 10 dargestellt, kreisartig ausgebildet. Gemäß einer weiteren vorteilhaften Ausführung der Erfindung ist die Leiterstruktur 10, wie in Fig. 8 gezeigt, ellipsenartig ausgebildet. Auch ist es möglich, dass die Leiterstruktur 10, wie in der Fig. 9 gezeigt, rechteckartig ausgebildet ist. Vorzugsweise weist die äußere Leiterschleife 18, wie in den Figuren 1, 3, 4, 5, 6, 7, 8 und 9 gezeigt, eine größere Leiterbreite als die innere Leiterschleife 17 auf. Wie eingangs erwähnt, ist die Leiterstruktur 10 auf das Trägerelement vorzugsweise aufgedruckt.

Besonders bevorzugt entspricht eine Gesamtlänge einer Außenkontur der Leiterstruktur 10 im Wesentlichen der halben Wellenlänge, die sich in der Leiterstruktur 10 bei Betrieb des RFID-Schaltkreises mit seiner Nenn-Sende/Empfangsfrequenz ergibt. Die Außenkontur der Leiterstruktur 10 bezeichnet die Länge eines vollständigen äußeren Umlaufs. Zum besseren Verständnis sind die Außenkonturabschnitte 26, 27, 28, 29, 30 einmal exemplarisch in der Fig. 4 gezeigt. Die Resonanzfrequenz der Antennenstruktur entspricht vorzugsweise der Bedingung:

$$f_{res} = \frac{c}{\sqrt{\varepsilon_{eff}} * 2l}$$

Hier bezeichnet c die Lichtgeschwindigkeit, $\varepsilon_{eff}$ die effektive Permittivität und l die Gesamtlänger der Außenkontur.

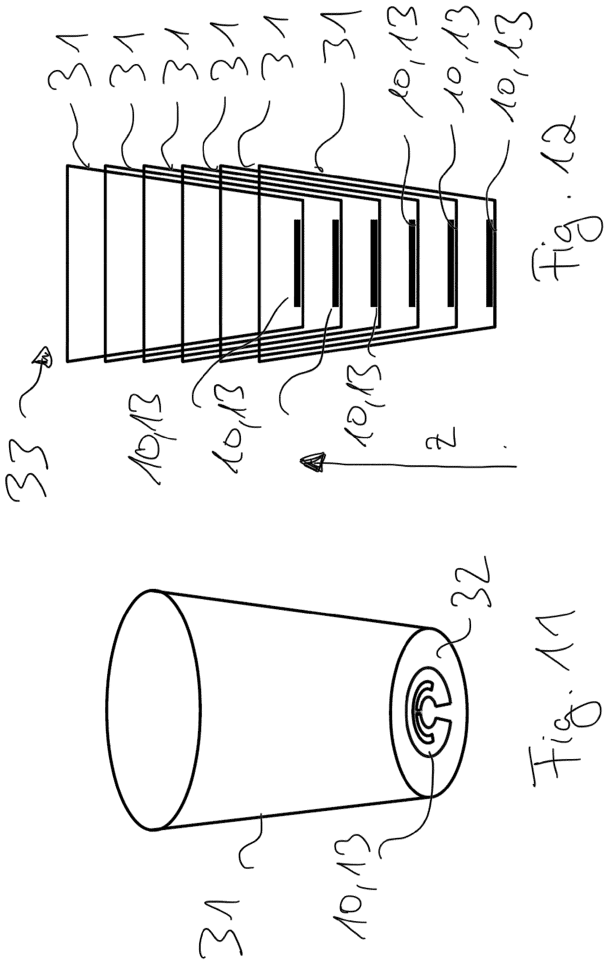

In Fig. 11 ist eine schematische Darstellung der erfindungsgemäßen Anordnung gezeigt. Diese umfasst einen der in Vorzugsrichtung stapelfähigen Artikel 31 sowie eine der zuvor beschriebenen erfindungsgemäßen Vorrichtungen, die in Fig. 11 vereinfacht nur mit der Leiterstruktur 10 bzw. dem Antennenelement 13 dargestellt ist. Die erfindungsgemäße Vorrichtung ist derart an dem Artikel 31 angeordnet, dass die Trägerelementebene 12 des Trägerelements zumindest im Wesentlichen senkrecht zu der Vorzugsrichtung, die in Fig. 11 durch den Pfeil in z-Richtung dargestellt ist, ausgerichtet ist.

Fig. 12 zeigt eine schematische Darstellung einer Mehrzahl voneinander in der Vorzugsrichtung gestapelter Artikel 31 mit an diesen angeordneten Leiterstrukturen 10 bzw. Antennenelementen 13. Die in den Figuren 11 und 12 gezeigten Einbaupositionen der Leiterstrukturen 10 bzw. der Antennenelemente 13 entsprechen derjenigen des - in der Zeichnung nicht gezeigten - Trägerelements der erfindungsgemäßen Vorrichtung.

Vorzugsweise ist der Artikel 31 ein Behälter für Lebensmittel. Weiter bevorzugt umfasst der Behälter ein Bodenelement 32. Die erfindungsgemäße Vorrichtung ist an oder in dem Bodenelement 32 angeordnet.

Die Erfindung umfasst auch das eingangs genannte Verfahren zum drahtlosen Identifizieren von in der Vorzugsrichtung gestapelten Artikeln 31 eines Stapels 33. Ein solcher Stapel ist in Fig. 12 beispielhaft gezeigt. An jedem der Artikel 31 ist jeweils eine der zuvor beschriebenen erfindungsgemäßen Vorrichtungen, die in den Figuren 11 und 12 durch die Leiterstruktur 10 bzw. die Antennenelemente 13 vereinfacht dargestellt sind, angeordnet. Wie zuvor beschrieben, sind diese derart angeordnet, dass jeweils die Trägerelementebenen 12 der Trägerelemente zumindest im Wesentlichen senkrecht zu der Vorzugsrichtung ausgerichtet sind. Das erfindungsgemäße Verfahren umfasst jedenfalls die Schritte:

Verbringen des Stapels 33 in den Wirkbereich einer zur drahtlosen Kommunikation mit den RFID-Schaltkreisen eingerichteten - in der Zeichnung nicht gezeigten - RFID-Leseeinrichtung oder umgekehrt derart, dass die RFID-Leseeinrichtung relativ zu dem Stapel 33 seitlich zu diesem zumindest im Wesentlichen parallel zu der Vorzugsrichtung positioniert ist. Weiter umfasst das erfindungsgemäße Verfahren das Auslesen von Identifikationsmerkmalen eines jeden der Artikel 31 des Stapels 33 mittels der RFI D-Leseeinrichtung.

Vorzugsweise umfasst das Verfahren auch das Bewegen der RFID-Leseeinrichtung relativ zu dem Stapel 33 oder umgekehrt parallel zu der Vorzugsrichtung sowie ein sequentielles Auslesen der Identifikationsmerkale Artikel für Artikel des Stapels 33 mittels der RFID-Leseeinrichtung.

**Patentansprüche**

1. Vorrichtung zur drahtlosen Identifikation von in einer Vorzugsrichtung stapelfähigen Artikeln (31), umfassend

ein Trägerelement mit einem RFID-Schaltkreis und einem sich zumindest im Wesentlichen in einer Trägerelementebene des Trägerelements planar erstreckend ausgebildeten Antennenelement (13), wobei das Antennenelement (13) eine elektrisch leitfähige Leiterstruktur (10) aufweist,
**dadurch gekennzeichnet, dass**
die Leiterstruktur (10) ein unter Bildung eines Isolationsspaltes (14) umlaufendes Leiterschleifenelement (15) umfasst und das Leiterschleifenelement (15) mindestens einen Isolationsschlitz (16) aufweist, derart, dass das Leiterschleifenelement (15) eine innere Leiterschleife (17) und eine äußere Leiterschleife (18) bildet, und wobei
die innere Leiterschleife (17) oder die äußere Leiterschleife (18) eine elektrische Unterbrechungsstelle (19) umfasst und der RFID-Schaltkreis im Bereich der Unterbrechungsstelle (19) unter elektrischer Kontaktierung der der Unterbrechungsstelle (19) zugewandten freien Enden (20, 21) der inneren Leiterschleife (17) oder der äußeren Leiterschleife (18) angeordnet ist, so dass die freien Enden (20, 21) jeweils an Antennenanschlüssen des RFID-Schalkreises elektrisch angeschlossen sind.

2. Vorrichtung nach Anspruch 1, **dadurch gekennzeichnet, dass** der Isolationsschlitz (16) von dem Leiterschleifenelement (15), mit Ausnahme der Unterbrechungsstelle (19), allseitig umschlossen ist.

3. Vorrichtung nach einem der Ansprüche 1 oder 2, **dadurch gekennzeichnet, dass** der Isolationsschlitz (16) eine konstante Breite aufweist.

4. Vorrichtung nach einem der Ansprüche 1 bis 3, **dadurch gekennzeichnet, dass** der Isolationsschlitz (16) sich über einen Winkelbereich von mindestens 120° erstreckt.

5. Vorrichtung nach einem der Ansprüche 1 bis 4, **dadurch gekennzeichnet, dass** sich der Isolationsspalt (14) über eine Winkelbereich von maximal 150° erstreckt.

6. Vorrichtung nach einem der Ansprüche 1 bis 5, **dadurch gekennzeichnet, dass** die Leiterstruktur (10) kreis- oder ellipsenartig ausgebildet ist.

7. Vorrichtung nach einem der Ansprüche 1 bis 5, **dadurch gekennzeichnet, dass** die Leiterstruktur (10) rechteckartig ausgebildet ist.

8. Vorrichtung nach einem der Ansprüche 1 bis 7, **dadurch gekennzeichnet, dass** die äußere Leiterschleife (18) eine größere Leiterbreite als die innere Leiterschleife (17) aufweist.

9. Vorrichtung nach einem der Ansprüche 1 bis 8, **dadurch gekennzeichnet, dass** die Gesamtlänge einer Außenkontur der Leiterstruktur (10) zumindest im Wesentlichen der halben Wellenlänge entspricht, die sich in der Leiterstruktur (10) bei Betrieb des RFID-Schaltkreises mit seiner Nenn-Sende-/Empfangsfrequenz ergibt.

10. Vorrichtung nach einem der Ansprüche 1 bis 9, **dadurch gekennzeichnet, dass** die Leiterstruktur (10) auf das Trägerelement aufgedruckt ist.

11. Anordnung umfassend einen in einer Vorzugsrichtung stapelfähigen Artikel (31) sowie eine Vorrichtung nach einem der Ansprüche 1 bis 10, wobei die Vorrichtung derart an dem Artikel (31) angeordnet ist, dass die Trägerelementebene des Trägerelements zumindest im Wesentlichen senkrecht zu der Vorzugsrichtung ausgerichtet ist.

12. Anordnung nach Anspruch 11, **dadurch gekennzeichnet, dass** der Artikel (31) ein Behälter für Lebensmittel ist.

**13.** Anordnung nach Anspruch 12, **dadurch gekennzeichnet, dass** der Behälter ein Bodenelement (32) umfasst und die Vorrichtung an oder in dem Bodenelement (32) angeordnet ist.

**14.** Verfahren zum drahtlosen Identifizieren von in einer Vorzugsrichtung gestapelten Artikeln (31) eines Stapels (33), wobei an jedem der Artikel (31) jeweils eine Vorrichtung nach einem der Ansprüche 1 bis 10 derart angeordnet ist, dass jeweils die Trägerelementebenen der Trägerelemente zumindest im Wesentlichen senkrecht zu der Vorzugsrichtung ausgerichtet sind, umfassend die Schritte:

- Verbringen des Stapels (33) in den Wirkbereich einer zur drahtlosen Kommunikation mit den RFID-Schaltkreisen eingerichteten RFID-Leseeinrichtung oder umgekehrt derart, dass die RFID-Leseeinrichtung relativ zu dem Stapel (33) seitlich zu diesem zumindest im Wesentlichen parallel zu der Vorzugsrichtung positioniert ist.
- Auslesen von Identifikationsmerkmalen eines jeden der Artikel (31) des Stapels (33) mittels der RFID-Leseeinrichtung.

**15.** Verfahren nach Anspruch 14, **gekennzeichnet durch**

- Bewegen der RFID-Leseeinrichtung relativ zu dem Stapel (33) oder umgekehrt parallel zu der Vorzugsrichtung,
- sequentielles Auslesen der Identifikationsmerkale Artikel für Artikel des Stapels (33) mittels der RFID-Leseeinrichtung.

10, 13

12

x

y

11

Fig. 1

11

10, 13

Fig. 2

z
y

EP 4 647 963 A1

Fig. 3

11

Fig. 5

Fig. 4

Fig. 6

Fig. 7

EP 4 647 963 A1

Fig. 8

Fig. 9

Fig. 10

Fig. 10

Fig. 11

Europäisches Patentamt
European Patent Office
Office européen des brevets

# EUROPÄISCHER RECHERCHENBERICHT

Nummer der Anmeldung

EP 24 17 4534

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/101078 A1 (FORSTER IAN J [GB] ET AL) 31. März 2022 (2022-03-31) * Absatz [0005] - Absatz [0007]; Abbildung 1 * ----- | 1-15 | INV. G06K19/077 |
| X | US 2022/405543 A1 (YLI-PELTOLA ILKKA [FI] ET AL) 22. Dezember 2022 (2022-12-22) * Absatz [0054] - Absatz [0065]; Abbildungen 1,14 * ----- | 1-15 | |
| X | WO 2022/269541 A1 (AVERY DENNISON RETAIL INFORMATION SERVICES LLC [US]) 29. Dezember 2022 (2022-12-29) * Absatz [0051]; Abbildung 1 * ----- | 1 | |
| X | US 2011/147467 A1 (CHOI YU YUNG [US]) 23. Juni 2011 (2011-06-23) * Absatz [0038]; Abbildung 1 * ----- | 1 | |

RECHERCHIERTE SACHGEBIETE (IPC)

G06K

Der vorliegende Recherchenbericht wurde für alle Patentansprüche erstellt

| Recherchenort | Abschlußdatum der Recherche | Prüfer |
|---|---|---|
| München | 21. Oktober 2024 | Fichter, Uli |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-2024

| Im Recherchenbericht angeführtes Patentdokument | Datum der Veröffentlichung | Mitglied(er) der Patentfamilie | Datum der Veröffentlichung |
|---|---|---|---|
| US 2022101078 A1 | 31-03-2022 | BR 112019012930 A2 | 10-12-2019 |
| | | CN 110140132 A | 16-08-2019 |
| | | CN 114781571 A | 22-07-2022 |
| | | EP 3563299 A1 | 06-11-2019 |
| | | EP 3828771 A1 | 02-06-2021 |
| | | EP 4109340 A1 | 28-12-2022 |
| | | JP 6613293 B2 | 27-11-2019 |
| | | JP 7285760 B2 | 02-06-2023 |
| | | JP 2018163643 A | 18-10-2018 |
| | | JP 2020042832 A | 19-03-2020 |
| | | JP 2023120196 A | 29-08-2023 |
| | | US 2018189623 A1 | 05-07-2018 |
| | | US 2022101078 A1 | 31-03-2022 |
| | | WO 2018125977 A1 | 05-07-2018 |
| US 2022405543 A1 | 22-12-2022 | BR 112022007497 A2 | 12-07-2022 |
| | | CN 114930343 A | 19-08-2022 |
| | | EP 4049181 A1 | 31-08-2022 |
| | | JP 2022553272 A | 22-12-2022 |
| | | SE 1951189 A1 | 22-04-2021 |
| | | US 2022405543 A1 | 22-12-2022 |
| | | WO 2021079266 A1 | 29-04-2021 |
| WO 2022269541 A1 | 29-12-2022 | AU 2022297735 A1 | 30-11-2023 |
| | | BR 112023024432 A2 | 20-02-2024 |
| | | CN 117730326 A | 19-03-2024 |
| | | EP 4359995 A1 | 01-05-2024 |
| | | JP 2024524008 A | 05-07-2024 |
| | | US 2024232568 A1 | 11-07-2024 |
| | | WO 2022269541 A1 | 29-12-2022 |
| US 2011147467 A1 | 23-06-2011 | US 2011147467 A1 | 23-06-2011 |
| | | WO 2011072618 A1 | 23-06-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022126577 A1